(19) Europäisches Patentamt
European Patent Office
Office européen des brevets

(11) **EP 1 970 712 B1**

(12) **EUROPÄISCHE PATENTSCHRIFT**

(45) Veröffentlichungstag und Bekanntmachung des Hinweises auf die Patenterteilung:
**28.11.2012 Patentblatt 2012/48**

(51) Int Cl.:
*G01P 5/20* (2006.01)     *G01P 21/02* (2006.01)
*G01S 17/58* (2006.01)     *G01S 17/87* (2006.01)

(21) Anmeldenummer: **08002799.8**

(22) Anmeldetag: **15.02.2008**

(54) **Verfahren zur Bestimmung des Abstandes zwischen zwei Erfassungsstellen einer Geschwindigkeitsmesseinrichtung für Partikel**

Method for measuring the distance between two measuring points in a speed measuring device for particles

Procédé destiné à la détermination de l'écart entre deux positions de saisie d'un dispositif de mesure de vitesse pour particules

(84) Benannte Vertragsstaaten:
**DE FR GB**

(30) Priorität: **15.03.2007 DE 102007013221**

(43) Veröffentlichungstag der Anmeldung:
**17.09.2008 Patentblatt 2008/38**

(73) Patentinhaber: **KSA Kugelstrahlzentrum Aachen GmbH**
**52074 Aachen (DE)**

(72) Erfinder: **Kittel,Stefan Dr.-Ing.**
**52066 Aachen (DE)**

(74) Vertreter: **Bauer, Dirk**
**BAUER WAGNER PRIESMEYER**
**Patent- und Rechtsanwälte**
**Grüner Weg 1**
**52070 Aachen (DE)**

(56) Entgegenhaltungen:
**EP-A1- 0 678 748**     **US-A- 5 517 298**
**US-A1- 2003 142 289**

## Beschreibung

Die Erfindung betrifft ein Verfahren zur Bestimmung des effektiven Messabstandes zwischen zwei Erfassungsstellen einer Einrichtung zur Messung der Geschwindigkeit eines Stromes frei fliegender Partikel, wobei an jeder Erfassungsstelle von einem passierenden Partikel ein Signal erzeugbar ist und die Geschwindigkeit des Stroms durch eine statistische Auswertung einer Vielzahl von durch die Partikel erzeugten Signale berechenbar ist, wobei ein Probekörper mit bekannter Geometrie an den Erfassungsstellen vorbeigeführt wird und aus den dabei erzeugten Signalen der Abstand zwischen den Erfassungsstellen bestimmt wird.

Eine Einrichtung zur Messung der Geschwindigkeit eines Stromes frei fliegender Partikel ist aus der EP 0 678 748 A1 bekannt. Eine derartige Einrichtung sowie das zugrunde liegende Messverfahren werden insbesondere beim so genannten Kugelstrahlen verwendet, das dazu dient, Werkstücke durch den Partikelbeschuss entweder in eine möglichst genau vorherbestimmbare Geometrie umzuformen oder aber durch den Aufbau gezielter Druckspannungen zu verfestigen.

Bei dem vorbekannten Messverfahren wird die Geschwindigkeit des Strahlmittels dadurch bestimmt, dass die Zeiten, die eine Vielzahl von Partikeln zum Durchqueren einer bestimmten Messstrecke benötigt, gemessen werden. Dazu werden als Erfassungsstellen zwei Lichtschranken mit bekanntem Abstand verwendet, die auf das Strahlmittel gerichtet und durch die passierenden Partikel unterbrochen werden. Dabei werden die Signale mit optischen Detektoren als Funktion der Zeit registriert. Der Lichtschrankenabstand kann dabei möglicherweise größer sein als der Partikeldurchmesser.

Bei kleinen Partikelzahlen durchqueren nur einzelne Partikel voneinander unabhängig die Lichtschranken. Durchläuft ein Partikel die erste Lichtschranke, so erzeugt es dort einen Impuls und kurze Zeit später auch an der zweiten Lichtschranke. Die Geschwindigkeit des Partikels ergibt sich sodann als Quotient aus dem Lichtschrankenabstand und der Zeitdifferenz bzw. bei einer Vielzahl hintereinander detektierter Partikel als arithmetisches Mittel der gemessenen Geschwindigkeit der einzelnen Partikel.

Wenn der Abstand der beiden Lichtschranken größer ist als der Durchmesser der Partikel und sehr viele Partikel die Lichtschranken durchqueren, dann ist eine eindeutige Zuordnung der Impulse an der ersten und der zweiten Lichtschranke nicht mehr möglich. Unter der Voraussetzung, dass die Anzahl der Partikel sehr groß ist und die Partikel sich unabhängig voneinander bewegen, kann jedoch mit einer statistischen Interpretation der Impulsfolge die Partikelgeschwindigkeit bestimmt werden. Dabei betrachtet man bei dem bekannten Verfahren zunächst ein Partikel bzw. einen Impuls an der ersten Lichtschranke. Ausgehend von diesem Impuls werden zu allen späteren Impulsen an der zweiten Lichtschranke die Zeitdifferenzen ermittelt und daraus die zugehörigen Geschwindigkeiten. Zu diesem Zeitpunkt kann jedoch noch nicht entschieden werden, welche Geschwindigkeit der ermittelten Geschwindigkeitswerte die wahre Partikelgeschwindigkeit ist.

Wenn nun für K Impulse der ersten Lichtschranke Zeitdifferenzen zur zweiten Lichtschranke ermittelt werden, dann wird die wahre Partikelgeschwindigkeit K mal ermittelt, während die anderen, nicht zutreffenden Geschwindigkeiten, die als Background-Signal bezeichnet werden, sich über den gesamten Geschwindigkeitsbereich verteilen. Die wie vorstehend erläutert ermittelte so genannte Summen Verteilung der Geschwindigkeit weist mit steigender Geschwindigkeit einen fallenden Verlauf auf und besitzt ein lokales Maximum. Subtrahiert man von dieser Summenverteilung das Background-Signal, so erhält man als Ergebnis die wahre Geschwindigkeitsverteilung der Partikel, deren Maximum die mittlere gemessene Geschwindigkeit darstellt.

In der Praxis werden unter Anwendung des bekannten Messverfahrens die beiden Lichtschranken für eine bestimmte Zeit mit einer sehr hohen quarzstabilisierten Frequenz, beispielsweise mit 20 MHz, abgetastet. Bei einem Lichtschrankenabstand von rund 0,5 mm und einer realistischen Geschwindigkeit der Partikel beim Kugelstrahlen von beispielsweise 100 m/s ergibt sich für ein Partikel eine Passierzeit durch die beiden Lichtschranken von 5 µs. In Verbindung mit der durch die endliche Messfrequenz begrenzten maximal messbaren Geschwindigkeit von 10.000 m/s ergibt sich ein dem System inhärenter Fehler von ± 1 % bei der Detektion eines einzelnen Partikels. Der mittlere Fehler liegt aber wegen der großen Zahl der detektierten Partikel deutlich darunter. Da die Zahl der detektierten Partikel sehr hoch ist, ist der Fehler durch das zeitdiskrete Einlesen der Impulse in der Praxis vernachlässigbar.

Eine Hauptfehlerquelle für möglicherweise nicht zutreffende Geschwindigkeitswerte ist ein fehlerhaft ermittelter bzw. sich in Zeitverlauf ändernder, effektiver Lichtschrankenabstand. Der bei einer Messung wirksame Lichtschrankenabstand kann sich durch äußere Einflüsse, z.B. Verschmutzung, ändern und muss deshalb während der Benutzung der Messeinrichtung regelmäßig kalibriert werden.

Aus den nachfolgend drei genannten Gründen ist der geometrisch, beispielsweise mit Hilfe eines Längemaßstabs oder eines Messmikroskops, bestimmbare Lichtschrankenabstand nicht identisch mit dem im Messbetrieb wirksamen effektiven Messabstand:

Zum einen üben möglicherweise voneinander abweichende Schaltschwellen der Detektoren in den Lichtschranken einen Einfluss auf den effektiven Messabstand aus. Beide Detektoren müssen nämlich zu einem bestimmten Teil abgedunkelt werden, um ein die Lichtschranken passierendes Partikel zu erken.nen. Wenn der Anteil der abgedunkelten Fläche, die Schaltschwelle, bei beiden Detektoren beispielsweise 50 % der gesamten Detektorfläche beträgt, dann ist der effektive Lichtschrankenabstand identisch mit dem geometrischen. Wenn aber durch Unterschiede in der Verstärkerelektronik einer der beiden Detektoren z.B. schon bei 40 % Abdunklung einen Impuls erzeugt, dann sind effektiver und geometrischer Lichtschrankeabstand nicht mehr identisch. Je nachdem welcher der beiden Detektoren eine kleinere Schaltschwelle besitzt, ist der bei der Messung wirksame Lichtschrankenabstand entweder größer oder kleiner als der geometrische Lichtschrankenabstand. Der Einfluss voneinander abweichender Schaltschwellen ist umso größer, je größer die Detektoren im Verhältnis zu ihrem Abstand sind.

Eine weitere Einflussgröße auf den effektiven Messabstand ist eine ungleichmäßige dauerhafte Verschmutzung oder Beschädigung der beiden Detektoren. Wenn z.B. eine Hälfte eines Detektors verschmutzt ist, dann ergibt sich bei einer Schaltschwelle von 50 % an beiden Detektoren ein veränderter effektiver Lichtschrankenabstand, da die 50 %-ige Abdunklung der verbleibenden Restfläche früher oder später eintritt als eine entsprechende Abdeckung der nicht wirksamen Gesamtfläche. Hierbei wird angenommen, dass die Verschmutzung selbst als Dauerzustand nicht zur Auslösung eines Impulssignals führt, sondern durch eine automatische Nachregelung der Signalaufbereitung kompensiert wird.

Ferner hat auch die Ausrichtung der Lichtquellen und der Detektoren einen Einfluss auf den effektiven Messabstand. Wenn etwa die beiden Lichtstrahlen, die die Detektoren beleuchten, nicht exakt parallel sind sondern schräg zueinander verlaufen, ergibt sich ein vom geometrischen Lichtschrankenabstand abweichender wirksamer Messabstand.

Im Ergebnis sind somit effektiver Messabstand und geometrischer Lichtschrankenabstand im Allgemeinen nicht identisch, so dass der effektive Messabstand mit einer geeigneten Kalibriermethode bestimmt werden muss.

Eine Möglichkeit zur Kalibrierung einer nach dem Prinzip der EP 0 678 748 A1 arbeitenden Einrichtung besteht darin, Partikel mit bekannter Geschwindigkeit an den Erfassungsstellen des Sensors vorbei zu bewegen. Indem man z.B. einen Probekörper oder ein Partikel aus einer bestimmten Höhe durch den entsprechend ausgerichteten Sensor fallen lässt, kann man durch Messung der Zeitdifferenz der Impulse, die der Probekörper an den beiden Lichtschranken erzeugt, den bei der Messung effektiven Messabstand der Lichtschranken bestimmen, da sich die Geschwindigkeit aus der Fallhöhe h und der Erdbeschleunigung g nach der folgenden Formel ergibt:

$$v = \sqrt{2gh}$$

Führt man mehrere Fallversuche aus derselben Höhe durch, so kann der effektive Messabstand als Mittelwert der zuvor erhaltenen Werte bestimmt werden. Die vorgenannte Vorgehensweise der Durchführung von Fallversuchen hat jedoch den Nachteil, dass der Kalibrierprozess zum einen langwierig ist und zum anderen der Sensor mit den beiden Lichtschranken aus der Kugelstrahlanlage ausgebaut werden muss, um die Fallversuche durchführen zu können. Der Aufwand für die regelmäßig durchzuführenden Kalibriervorgänge ist daher bei der bekannten Vorgehensweise erheblich.

Die US 2003/142289 A1 offenbart, insbesondere in der dortigen Figur 13 mit dem korrespondierenden Beschreibungstext, ein Verfahren zur Kalibrierung einer Einrichtung zur Messung der Geschwindigkeit eines Partikelstroms. Dabei werden die Partikel perlenschnurähnlich auf einem Schlitten angeordnet und mit definierter Geschwindigkeit durch den Strömungskanal in Strömungsrichtung bewegt, während mittels einer optischen Messapparatur Daten aufgenommen und ausgewertet werden.

Aus der EP 1460 433 A2 ist ein Verfahren zur Bestimmung der Abbildungsgleichung für die Selbstkalibrierung von Stereo-PTV-Verfahren bekannt. Bei dem bekannten Verfahren kommen zum einen Kalibrierplatten zur Bestimmung der Abbildungsparameter der Kameras zum Einsatz, wie sich dies zum Beispiel aus Absatz [0016] der EP 1460 433 A2 ergibt. Zum anderen wird mittels Kreuzkorrelation von gleichzeitig aufgenommenen Bildern die genaue Lage der Lichtschnittebene bestimmt.

Schließlich offenbart die US 4 373 816 A noch eine Vorrichtung und ein Verfahren zur Bestimmung von Oberflächenabständen, wobei ein Probekörper mit Auslösestellen rotatorisch bewegt wird und beim Scannen der Oberfläche Zeitdifferenzen als optische Weglängen gemessen werden.

## Aufgabe

Der Erfindung liegt die Aufgabe zugrunde, ein Verfahren zur Kalibrierung einer Messvorrichtung zur Geschwindigkeitsbestimmung eines Partikelstroms bereitzustellen, d.h. ein Verfahren zur Bestimmung des effektiven Messabstandes zwischen zwei Erfassungsstellen, wobei das vorzuschlagende Verfahren einfach durchzuführen sein und dabei gleichzeitig eine hinreichend große Genauigkeit liefern soll.

**Lösung**

Ausgehend von einem Verfahren der eingangs beschriebenen Art wird diese Aufgabe erfindungsgemäß dadurch gelöst, dass der Probekörper eine Vielzahl voneinander beabstandeter und hintereinander angeordneter Auslösestellen aufweist, deren räumliche Anordnung zueinander bekannt ist, und dass beim Passieren jeder Auslösestelle an jeder Erfassungsstelle ein Signal erzeugt wird, wobei aus den an den beiden Erfassungsstellen von der Vielzahl der Auslösestellen erzeugten zeitlichen Signalfolgen der Abstand der Erfassungsstellen zueinander bestimmt wird.

Wenn der Probekörper an den beiden Erfassungsstellen vorbei bewegt wird, ergeben sich an den beiden Erfassungsstellen charakteristische Impulsfolgen, die von der Geometrie des Probekörpers, d.h. dem Abstand der Auslösestellen, abhängen. Mit Hilfe der beiden zeitlich versetzten Impulsfolgen kann der wirksame Abstand der Erfassungsstellen, d.h. der effektive Messabstand, aus den gemessenen Zeiten berechnet werden. Überraschender Weise spielt dabei die Geschwindigkeit, mit der der Probekörper an den Erfassungsstellen vorbei bewegt wird, keine Rolle mehr, solange dafür gesorgt wird, dass die Geschwindigkeit auf der Strecke beim Passieren der Erfassungsstellen keine abrupten Schwankungen erfährt. Das erreicht man durch einen möglichst kleinen Abstand der Auslösestellen auf dem Probekörper sowie eine hinreichend große Anzahl von Auslösestellen. In diesem Fall ist im Wesentlichen die momentane Geschwindigkeit beim Passieren des Probekörpers zwischen den Erfassungsstellen maßgeblich. Mathematisch betrachtet nähert sich dabei der aus Wegdifferenz und Zeitdifferenz gebildete Differenzenquotient dem Differentialquotient, d.h. der aktuellen Geschwindigkeit, an.

Durch die erfindungsgemäße Verwendung eines Probekörpers mit einer Vielzahl von Auslösestellen kann die Kalibrierung der Messeinrichtung sehr einfach auf die genaue Längen-Vermessung des Probekörpers, d.h. die Messung des Abstandes zwischen den Erfassungsstellen, zurückgeführt werden. Dabei ist es nicht erforderlich, dass die Auslösestellen alle denselben Abstand voneinander besitzen, sondern es ist lediglich erforderlich, den Abstand der Auslösestellen voneinander zu kennen. Falls die Geschwindigkeit des Probekörpers beim Vorbeifahren an den Erfassungsstellen nicht näherungsweise als konstant angesehen werden kann - was bei entsprechender Gestaltung des Probekörpers jedoch nahezu immer möglich ist - so ist auch eine beschleunigte Bewegung des Probekörpers während der Phase des Passierens der Erfassungsstellen möglich, wobei in diesem Falle für die Bestimmung des effektiven Messabstandes jedoch der Verlauf der Beschleunigung über der Zeit während des Passiervorgangs bekannt sein muss.

Eine besonders vorteilhafte Berechnung des effektiven Messabstandes ergibt sich nach den beiden folgenden alternativen Formeln:

$$\bar{s}_{Erfassungsstelle,eff} = \frac{1}{n}\sum_{i=1}^{n} s_{i,Probekörper}\cdot\frac{\partial t_i}{\Delta t_{i,1}} \quad oder \quad \bar{s}_{Erfassungsstelle,eff} = \frac{1}{n}\sum_{i=1}^{n} s_{i,Probekörper}\cdot\frac{\partial t_i}{\Delta t_{i,2}}$$

wobei in den vorgenannten Formeln bedeuten:

$\bar{s}_{Erfassungsstelle,eff}$ = zu ermittelnder Abstand der Erfassungsstellen

$s_{i,Probekörper}$ = bekannter Abstand zweier Auslösestellen des Probekörpers

$n$ = Gesamtanzahl der Auslösestellen des Probekörpers

$\Delta t_{i,1}$ = Zeit zwischen den Signalen zweier Auslösestellen an der ersten Erfassungsstelle

$\Delta t_{i,2}$ = Zeit zwischen den Signalen zweier Auslösestellen an der zweiten Erfassungsstelle

$\partial t_i$ = Zeitdifferenz zwischen den Signalen, die eine Auslösestelle des Probekörpers an der ersten und der zweiten Erfassungsstelle erzeugt

Vorzugsweise werden die Partikel des Partikelstromes und die Auslösestellen des Probekörpers an den Erfassungsstellen auf optische Weise, und zwar vorzugsweise mittels Lichtschranken, detektiert. Dabei sollte sich an jeder Erfassungsstelle eine Lichtschrankenanordnung befinden, deren Lichtschranke, die einen Erfassungsquerschnitt definierte, von passierenden Partikeln des Stromes ebenso wie von den Auslösestellen des Probekörpers unterbrochen wird, die eine Änderung der Lichtdurchlässigkeit aufweisen. Dabei kann es sich um Reflexionslichtschranken oder Transmissionslichtschranken handeln.

Alternativ hierzu ist es jedoch gleichfalls möglich, dass die Partikel sowie die Auslösestellen des Probekörpers an den Erfassungsstellen auf induktive oder kapazitive Weise detektiert werden. Im erstgenannten Fall befindet sich dann an jeder Erfassungsstelle eine Spulenanordnung, in deren Erfassungsquerschnitt passierende Partikel des Stroms sowie die Auslösestellen des Probekörpers ein Signal induzieren. Im Falle kapazitiver Erfassung wird die Signalerzeugung entsprechend durch eine Änderung der elektrischen Feldstärke an den Erfassungsstellen hervorgerufen.

Bei einer Detektion der Auslösestellen auf optische Weise kann der Probekörper eine Abfolge abwechselnd hintereinander angeordneter lichtdurchlässiger und lichtundurchlässiger Abschnitte mit jeweils bekannter, vorzugsweise innerhalb der Gruppe lichtdurchlässiger Abschnitte sowie innerhalb der Gruppe lichtundurchlässiger Abschnitte jeweils identischer Länge aufweisen. Bei dem Probekörper handelt es sich somit beispielsweise um eine Gitterstruktur, die z.B. in Form eines Blechstreifens aus abwechselnd hintereinander angeordneten lichtdurchlässigen Abschnitten (Freiräume bzw. ausgeschnittene Bereiche) und lichtundurchlässigen Abschnitten besteht. Dabei können die lichtdurchlässigen Abschnitte als linear hintereinander angeordnete Durchbrüche mit vorzugsweise rechteckiger Form ausgeprägt sein. Es kann aber auch ein abschnittsweise lichtundurchlässig bedruckter Glasstreifen als Probekörper verwendet werden.

Um ein möglichst exaktes Messergebnis bei der Kalibrierung zu erzielen, sollte derselbe Probekörper mehrfach nacheinander an den Erfassungsstellen vorbei geführt werden und nach jedem Vorbeiführen ein Wert des effektiven Messabstandes der Erfassungsstellen zueinander bestimmt werden und anschließend ein Mittelwert der vorgenannten Werte einzelner Vorgänge des Vorbeiführens als Ergebnis für den effektiven Messabstand der Erfassungsstellen bestimmt werden.

Um eine hinreichende Genauigkeit für den ermittelten effektiven Messabstand sicher zu stellen, sollte bei einem Vorbeiführen des Probekörpers an den Erfassungsstellen nur dann ein Wert für den effektiven Messabstand der Erfassungsstellen bestimmt und ausgegeben werden, wenn eine Mindestanzahl an gültigen Signalen der zeitlichen Signalfolgen sowohl an der ersten Erfassungsstelle als auch an der zweiten Erfassungsstelle gemessen wird.

Des Weiteren sollte zur Sicherstellung hinreichender Messgenauigkeit die Ausgabe eines Ergebnisses für den effektiven Messabstand nur dann erfolgen, wenn die Anzahl der Signale der zeitlichen Signalfolge der ersten Erfassungsstelle mit der Anzahl der Signale der zeitlichen Signalfolge der zweiten Erfassungsstelle übereinstimmt.

Da insbesondere bei einem manuellen Vorbeiführen des Probekörpers an den Erfassungsstellen eine ungleichförmige Bewegung nicht gänzlich auszuschließen ist, sollte zu Kontrollzwecken die Zeit zwischen der Erzeugung des der ersten Auslösestelle des Probekörpers zugeordneten Signals und des der letzten Auslösestelle des Probekörpers zugeordneten Signals eine bestimmte Maximalzeit nicht überschreiten bzw. eine bestimmte Minimalzeit nicht unterschreiten.

Die einfachste Möglichkeit zur Kalibrierung der Messeinrichtung besteht darin, dass der Probekörper manuell von einer Bedienperson an den Erfassungsstellen vorbeigeführt wird. Um dabei zumindest die Richtung der Bewegung des Probekörpers möglichst exakt vorzugeben und ein "schräges" Vorbeiführen zu vermeiden, sollte der Probekörper entlang einer Führungseinrichtung, vorzugsweise entlang einer linearen Führungsschiene, an den Erfassungsstellen vorbeigeführt werden. Dabei kann die Führungseinrichtung temporär an der Geschwindigkeitsmesseinrichtung montiert oder aber auch dauerhaft daran befestigt sein, solange der Messvorgang im Strahlbetrieb durch die Führungseinrichtung nicht behindert bzw. beeinträchtigt wird.

Wenn eine gleichbleibende und stets kontrollierte Bewegung des Probekörpers an den Erfassungsstellen vorbei sichergestellt sein soll, kann der Probekörper auch mittels einer Antriebseinrichtung, die vorzugsweise mit Fremdenergie versorgt ist, an den Erfassungsstellen vorbei geführt werden.

**Ausführungsbeispiel**

Die Erfindung wird nachfolgend anhand eines Beispiels unter zu Hilfenahme der Zeichnung näher erläutert. Dabei zeigt:

Fig. 1a) - Fig. 1d)      den Einfluss unterschiedlicher Schaltschwellen der an den Erfassungsstellen verwendeten Detektoren,

Fig. 2a) - Fig. 2c)      den Einfluss von Verschmutzung an den Detektoren,

Fig. 3a) und Fig. 3b)      den Einfluss einer nicht-parallelen Ausrichtung der auf die Detektoren treffenden Lichtstrahlen

Fig. 4      einen Probekörper und zwei Erfassungsstellen der Gesehwindigkeitsmesseinhchtung und

Fig. 5      eine an den Erfassungsstellen gemessene Impulsfolge während des Kalibriervorgangs.

Bei dem nachfolgend erläuterten Ausführungsbeispiel werden die Erfassungsstellen von zwei Lichtschranken gebildet, um. die Geschwindigkeit von die beiden Lichtstrahlen hintereinander durchdringenden Partikeln zu messen. Durch Messung der Zeitdifferenz zwischen zwei Impulsen, die ein Partikel an den beiden Lichtschranken erzeugt, kann bei bekanntem Lichtschrankenabstand $s_{LS}$, d.h. bei bekanntem effektiven Abstand der Erfassungsstellen $\overline{s}_{Erfassungsstell,eff}$, die Geschwindigkeit eines passierenden Partikels bestimmt werden. Mit dem aus der EP 0 678 748 A1 bekannten Verfahren kann durch eine statistische Interpretation der Impulse die Geschwindigkeit der Partikel bestimmt werden, wenn deren Anzahl hinreichend groß ist und sich die Partikel unabhängig voneinander bewegen.

Der geometrische Abstand $s_{LS,Geo}$ der beiden Lichtschranken, d.h. der geometrische Abstand $\overline{s}_{Erfassungsstelle,Geo}$ der Erfassungsstellen voneinander, kann auf vergleichsweise einfache Weise z.B. mittels eines Längenmaßstabs, gemessen werden (z.B. Messmikroskop, Lineal o.ä.). Der geometrische Lichtschrankenabstand ist aber aus mehrerlei Gründen in der Regel nicht mit dem effektiven Lichtschrankenabstand bei der Messung der Partikelgeschwindigkeit identisch:

Die die Erfassungsstellen bildenden Lichtschranken bestehen zum einen aus einer einen Lichtstrahl emittierenden Lichtquelle und einem ein lichtempfindliches Feld aufweisenden Detektor, auf das der jeweilige Lichtstrahl gerichtet ist. Der Lichtstrahl wird von dem Strom der zu detektierenden Partikel unterbrochen und daher das Auftreffen des Lichtstrahls auf das lichtempfindliche Feld des Detektors temporär unterbunden.

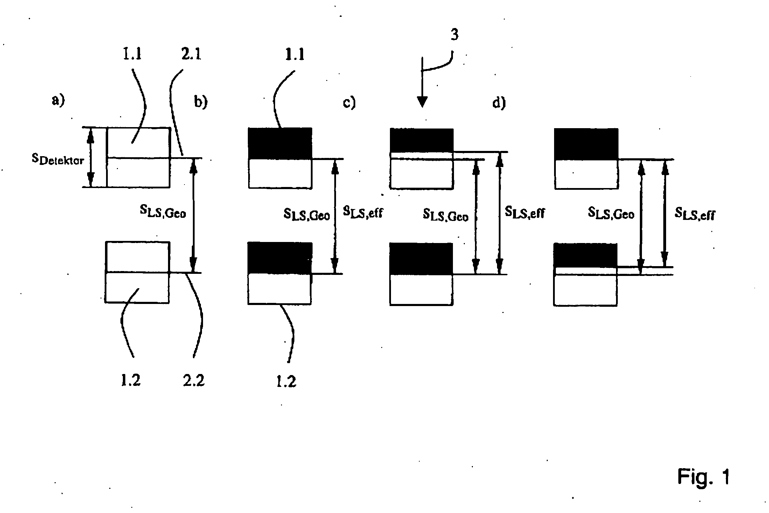

Figur 1a) zeigt in schematischer Darstellung zwei lichtempfindliche Detektoren 1.1 und 1.2 deren Mittellinien 2.1 und 2.2 sich in einem geometrischen Lichtschrankenabstand $s_{LS,Geo}$ zueinander befinden. Eine Kantenlänge des eine quadratische Form besitzenden lichtempfindlichen Feldes der Detektoren 1.1 und 1.2 besitzt das Maß $s_{Detektor}$.

Um ein die jeweilige Lichtschranke passierendes Partikel zu erkennen, müssen die Detektoren 1.1. und 1.2 zu ihrem bestimmten Teil der Fläche des lichtempfindlichen Feldes abgedunkelt werden. Wenn der Anteil der abzudunkelnden Fläche, die Schaltschwelle, bei beiden Detektoren 1.1. und 1.2 z.B. 50 % beträgt, so ist der effektive Lichtschrankenabstand $s_{LS,eff}$ identisch mit dem geometrischen Lichtschrankenabstand $s_{LS,Geo}$, wie dies in Fig. 1b) dargestellt ist.

In der Praxis liegt nun jedoch nicht immer eine Identität der beiden Schaltschwellen vor, vielmehr weichen, z.B. durch Unterschiede in der Verstärkerelektronik, die Schaltschwellen voneinander ab. Falls z.B. einer der beiden Detektoren 1.1 schon bei 40 % Abdunklung einen Impuls erzeugt, dann sind effektiver und geometrischer Lichtschrankenabstand nicht mehr identisch. Besitzt, wie in Fig. 1c) dargestellt, der in Flugrichtung 3 der Partikel als erstes überstrichene Detektor 1.1 eine geringere Schaltschwelle, so ist der effektive Lichtschrankenabstand $s_{LS,eff}$ größer als der geometrische Lichtschrankenabstand $s_{LS,Geo}$. Umgekehrt sind die Verhältnisse bei dem in Figur 1d) veranschaulichten Fall, in dem der in Flugrichtung 3 als zweites überstrichene Detektor 1.2 die kleinere Schaltschwelle besitzt.

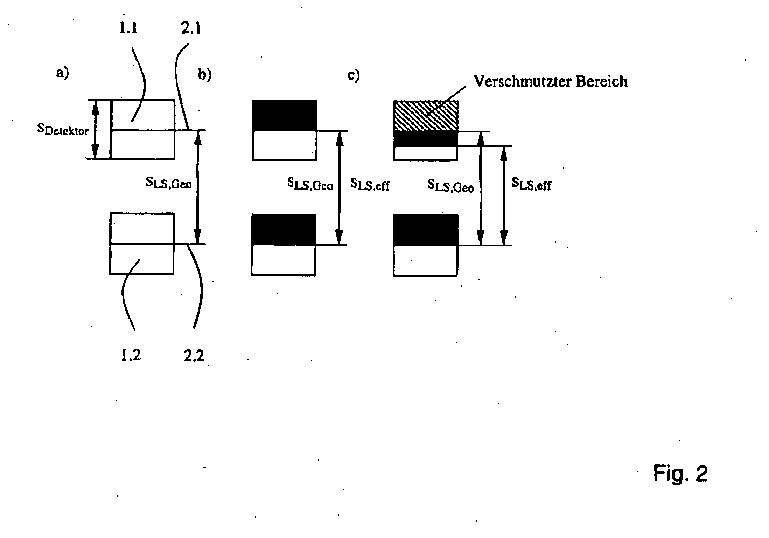

In den Figuren 2a) bis 2c) ist der Einfluss einer ungleichmäßigen dauerhaften Verschmutzung oder Beschädigung der beiden Detektoren 1.1. und 1.2 veranschaulicht. Wie bei der Darstellung gemäß den Figuren 1a) bis 1d) besitzen die beiden Mittellinien 2.1 und 2.2. der beiden Detektoren 1.1 und 1.2 einen Abstand $s_{LS,Geo}$ voneinander. Bei der Konstellation gemäß Figur 2b) stimmen effektiver und geometrischer Lichtschrankenabstand überein, da die lichtempfindlichen Felder beider Detektoren 1.1 und 1.2, wie im Idealfall, gänzlich unverschmutzt sind. Bei der Darstellung gemäß Figur 2c) ist die obere Hälfte des Detektors 1.1 z.B. dauerhaft beschmutzt oder so beschädigt, dass in diesem Bereich kein Lichtdurchgang möglich ist. In diesem Fall ergibt sich bei einer Schaltschwelle von 50 % der tatsächlich vorhandenen bzw, verbleibenden. Restfläche des lichtempfindlichen Feldes an beiden Detektoren ein geringerer effektiver Lichtschrankenabstand $s_{LS,eff}$. als dies dem geometrischen Lichtschrankenabstand $s_{LS,Geo}$ entspricht. Hierbei soll angenommen werden, dass durch die Verschmutzung oder Beschädigung selbst kein Impulssignal ausgelöst wird, sondern dass in Folge einer automatischen elektronischen Nachregelung der Signalaufbereitung eine Kompensation des verloren gegangen lichtempfindlichen Flächenanteils erfolgt.

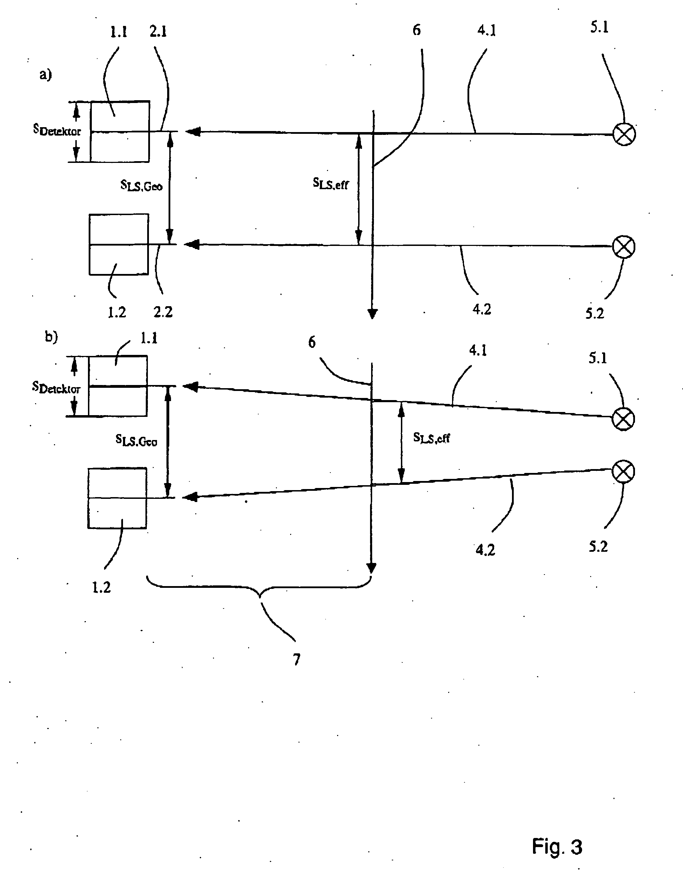

Ein weiterer verfälschender Einfluss auf die Messgenauigkeit kann eine fehlerhafte, d.h. nicht parallele Ausrichtung der von den Lichtquellen emittierten Lichtstrahlen haben. Figur 3a) zeigt zwei von zwei Lichtquellen 5.1 und 5.2 ausgehende Lichtstrahlen 4.1 und 4.2, die auf die Mittellinien 2.1 und 2.2 der beiden Detektoren 1.1 und 1.2 ausgerichtet sind. In dem hier gezeigten Fall sind die beiden Lichtstrahlen 4.1 und 4.2 exakt parallel zueinander ausgerichtet, so dass der effektive Lichtschrankenabstand $s_{LS,eff}$, der für die entlang der Linie 6 fliegenden Partikel maßgeblich ist, dem geometrischen Lichtschrankenabstand $s_{LS,Geo}$ entspricht.

Bei der in Figur 3b) veranschaulichten Anordnung verlaufen die Lichtstrahlen 4.1 und 4.2 aufgrund einer nicht exakten Ausrichtung der Lichtquellen 5.1 und 5.2 nicht parallel zueinander, sondern divergieren. Da sich die Linie 6, auf der sich die Partikel bewegen, in einem Abstand 7 von den Detektoren 1.1 und 1.2 befindet, ist der effektive Lichtschrankenabstand geringer als der geometrische, da der die Impulsauslösung bestimmende Abstand der Lichtstrahlen aufgrund deren Divergenz im Bereich der Linie 6 geringer ist als der Abstand der Mittellinien 2.1 und 2.2 an den Detektoren, d.h. der geometrische Lichtschrankenabstand.

Der somit bei Messvorrichtungen für die Partikelgeschwindigkeit regelmäßig durchzuführende Kalibrierungsvorgang zur Bestimmung des effektiven Lichtschrankenabstandes erfolgt erfindungsgemäß auf die folgende Weise:

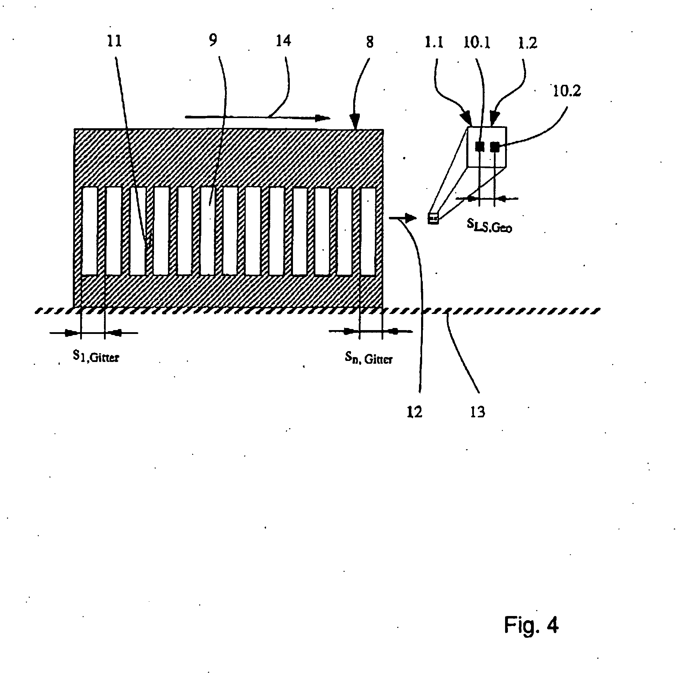

Figur 4 zeigt einen Probekörper 8, bei dem es sich um ein in seinem Umriss rechteckiges Blech mit einer Anzahl n (hier n =13) von ebenfalls rechtwinkligen Ausschnitten 9 handelt. Um eine hinreichend große Anzahl von Impulsen beim Durchlauf des Probekörpers 8 durch die aus zwei Lichtschranken 10.1 und 10.2 gebildeten Sensoranordnung zu erzeugen, sollte die Anzahl n größer als 3 sein. Die Ausschnitte 9 besitzen sämtlich dieselbe Größe und Gestalt und sind zudem parallel zueinander ausgerichtet und linear mit identischem Abstand zueinander angeordnet. Zwischen zwei benachbarten Ausschnitten 9 befindet sich jeweils ein diese voneinander trennender Steg 11. Die Breite eines Steges 11 und die Breite eines Ausschnitts 9 ergeben in der Summe den Abstand $s_{i,Gitter}$, der im Fall der vorliegenden Gitterstruktur mit identischen Ausschnitten 9 und Stegen 11 stets gleich bleibend ist. Die Auslösestellen 15 der Gitterstruktur werden von den Hell-Dunkel-Übergängen an den Längskanten der Stege 11 gebildet.

In der rechten Hälfte der Figur 4 ist einmal in ungefähr maßstäblicher Größe und zum anderen schräg rechts darüber der Deutlichkeit halber in vergrößertem Maßstab die aus den zwei Lichtschranken 10.1 und 10.2 bestehende Sensoranordnung zur Erfassung der sich entlang der Linie 12 bewegenden Partikel dargestellt. Die beiden Lichtschranken 10.1 und 10.2, d.h. die beiden Detektoren 1.1 und 1.2, besitzen einen gemessenen geometrischen Lichtschrankenabstand $s_{L.S.Gen}$.

Wird nun der Probekörper 8, der eine Hell/Dunkel-Struktur mit bekannter Geometrie darstellt, vorzugsweise entlang einer geradlinigen Führungsschiene 13 durch die Lichtschranken 10.1 und 10.2 bewegt, so führen die lichtundurchlässigen Stege 11 bzw. die lichtdurchlässigen Ausschnitte 9 in zeitlichem Abstand zueinander zu einer charakteristischen Signalfolge an den beiden Lichtschranken 10.1 und 10.2. Die durch den Pfeil 14 verdeutlichte Bewegungsrichtung des Gitters entspricht dabei der Bewegungsrichtung der Partikel, die im Strahlbetrieb der Vorrichtung die Lichtschrankenanordnung durchfliegen. Beim Kalibrierungsvorgang ist die Partikelstrahlanlage zwar nicht in Betrieb, die Sensoranordnung muss während des Vorbeiführens aber nicht demontiert werden.

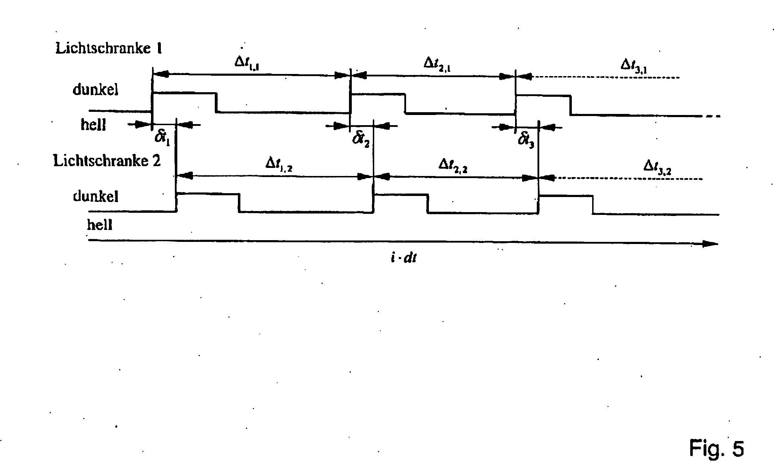

Figur 5 zeigt dabei in der oberen Hälfte des Diagramms die sich an der in Bewegungsrichtung zuerst unterbrochenen Lichtschranke 10.1 ergebende Impulsfolge, wohingegen die untere Hälfte des Diagramms die Impulsfolge an der "später" liegenden Lichtschranke 10.2 verdeutlicht.

Die Ermittlung des effektiven Lichtschrankenabstandes, d.h. des effektiven Messabstandes der Erfassungsstellen, erfolgt dabei alternativ nach einer der beiden Formeln

$$\overline{s}_{Erfassungsstelle,eff} = \frac{1}{n}\sum_{i=1}^{n} s_{i,Probekörper}\frac{\delta_i}{\Delta t_{i,1}} \quad \text{oder} \quad \overline{s}_{Erfassungsstelle,eff} = \frac{1}{n}\sum_{i=1}^{n} s_{i,Probekörper}\frac{\delta_i}{\Delta t_{i,2}}$$

wobei bedeutet

$\overline{S}_{Erfassunggstelle,eff}$ = zu ermittelnder Abstand der Erfassungsstellen

$S_{i,Probekörper}$ = bekannter Abstand zweier Auslösestellen des Probekörpers

$n$ = Gesamtanzahl der Auslösestellen des Probekörpers

$\Delta t_{i,1}$ = Zeit zwischen den Signalen zweier Auslösestellen an der ersten Erfassungsstelle

$\Delta t_{i,2}$ = Zeit zwischen den Signalen zweier Auslösestellen an der zweiten Erfassungsstelle

$\partial t_i$ = Zeitdifferenz zwischen den Signalen, die eine Auslösestelle des Probekörpers an der ersten und der zweiten Erfassungsstelle erzeugt.

Um im vorliegenden Fall einer manuellen Durchführung des Probekörpers 8 durch die Sensoranordnung eine hinreichend korrekte Kalibrierung, d.h. Bestimmung des effektiven Messabstandes der Lichtschranken sicher zu stellen, wird eine Minimalzeit sowie eine Maximalzeit für die Hindurchführung der gesamten Länge des Probekörpers 8 durch die Sensoranordnung vorgeschrieben. Hierdurch wird sowohl eine zu hohe als auch eine zu niedrige Geschwindigkeit des Probekörpers 8 unterbunden, da bei Handbewegungen in diesen Fällen Unregelmä-Bigkeiten zu befürchten wären bzw. andersherum ausgedrückt bei "mittleren" Geschwindigkeiten die größte Gleichmäßigkeit der Bewegung, d.h. Konstanz der Geschwindigkeit während des Messvorgangs, unterstellt werden kann. Zudem muss eine Mindestanzahl an gültigen Impulsen an der ersten und der zweiten Lichtschranke gemessen werden. Ferner müssen die Impulsanzahlen der ersten und der zweiten Lichtschranke übereinstimmen. Außerdem dürfen die Zeiten $\Delta t_{i,1}$ und $\Delta t_{i,2}$ nicht mehr als ein bestimmtes Maß voneinander abweichen. Dies bedeutet, dass vorzugsweise an beiden Erfassungsstellen parallel zueinander die zeitlichen Abstände zwischen den Signalen zweier Auslösestellen, d.h. benachbarter Stege bzw. Ausschnitte, d.h. Hell-Dunkel-Ubergänge, erfasst und miteinander verglichen werden.

Ferner sollte die Standardabweichung der ermittelten Werte für $\partial t_i$ ein bestimmtes Maß nicht überschreiten, um die Gleichmäßigkeit der Bewegung der Gitterstruktur durch die Sensoranordnung zu gewährleisten. Im vorliegenden Fall beträgt der geometrische Lichtschrankenabstand $s_{LS,Geo}$ 0,5 mm, der Abstand zwischen zwei Hell-Dunkel-Übergängen, d.h. Auslösestellen des Probekörpers (8) 6,0 mm. Als Minimalzeit für die Durchführung des gesamten Probekörpers 8 durch die Messanordnung kann z.B. von einem Wert von 0,3 s sowie für die Maximalzeit von 2,0 s ausgegangen werden. Es sollte eine Mindestanzahl von 10 Impulsen sowohl an der ersten als auch an der zweiten Lichtschranke gemessen werden. Die Abweichung der Zeiten $\Delta t_{i,1}$ und $\Delta t_{i,2}$ sollte maximal $\pm 2,5\%$. bezogen z.B. auf die größere der beiden Zeiten, betragen. Die Standardabweichung der $\partial t_1$ sollte nicht größer als $\pm 2,5\ \%$, bezogen auf die ermittelten $\partial t_i$ sein.

**Bezugzeichenliste**

| | |
|---|---|
| 1.1, 1.2 | Detektor |
| 2.1, 2.2 | Mittellinie |
| 3 | Flugrichtung |
| 4.1, 4.2 | Lichtstrahl |
| 5.1, 5.2 | Lichtquelle |
| 6 | Linie |
| 7 | Abstand |
| 8 | Probekörper |
| 9 | Ausschnitt |
| 10.1, 10.2 | Lichtschranke |
| 11 | Steg |
| 12 | Linie |
| 13 | Führungsschiene |
| 14 | Pfeil |
| 15 | Auslösestelle |

**Patentansprüche**

1. Verfahren zur Bestimmung des effektiven Messabstands zwischen zwei Erfassungsstellen einer Einrichtung zur Messung der Geschwindigkeit eines Stromes frei fliegender Partikel, wobei an jeder Erfassungsstelle von einem passierenden Partikel ein Signal erzeugbar ist und die Geschwindigkeit des Stroms durch eine statistische Auswertung einer Vielzahl von durch die Partikel erzeugten Signalen berechenbar ist, wobei ein Probekörper (8) mit bekannter Geometrie an den Erfassungsstellen vorbeigeführt wird und aus den dabei erzeugten Signalen der Abstand zwischen den Erfassungsstellen bestimmt wird, **dadurch gekennzeichnet, dass** der Probekörper (8) eine Vielzahl voneinander beabstandeter und hintereinander angeordnete Auslösestellen (15) aufweist, deren räumliche Anordnung zueinander bekannt ist, und dass beim Passieren jeder Auslösestelle (15) an jeder Erfassungsstelle ein Signal erzeugt wird, wobei aus den an den beiden Erfassungsstellen von der Vielzahl der Auslösestellen (15) erzeugten zeitlichen Signalfolgen der Abstand der Erfassungsstellen zueinander bestimmt wird.

2. Verfahren nach Anspruch 1, **dadurch gekennzeichnet, dass** der Abstand bestimmt wird nach der Formel

$$\bar{s}_{Erfassungsstelle,eff} = \frac{1}{n}\sum_{i=1}^{n} s_{i,Probekörper}\frac{\partial t_i}{\Delta t_{i,1}} \quad \text{oder} \quad \bar{s}_{Erfassungsstelle,eff} = \frac{1}{n}\sum_{i=1}^{n} s_{i,Probekörper}\frac{\partial t_i}{\Delta t_{i,2}}$$

3. Verfahren nach Anspruch 1 oder 2, **dadurch gekennzeichnet, dass** die Partikel und die Auslösestellen des Probekörpers (8) auf optische Weise detektiert werden.

4. Verfahren nach Anspruch 3, **dadurch gekennzeichnet, dass** sich an jeder Erfassungsstelle eine Lichtschrankenanordnung befindet, deren einen Erfassongsquerschnitt definierende Lichtschranke (10.1, 10.2) von passierenden Partikeln des Stroms sowie von den eine Änderung der Lichtdurchlässigkeit aufweisenden Auslösestellen (15) des Probekörpers (8) unterbrochen wird.

5. Verfahren nach Anspruch 1 oder 2, **dadurch gekennzeichnet, dass** die Partikel sowie die Auslösestellen (15) des Probekörpers (8) an den Erfassungsstellen auf induktive Weise detektiert werden.

6. Verfahren nach Anspruch 5, **dadurch gekennzeichnet, dass** sich an jeder Erfassungsstelle eine Spulenanordnung befindet, in deren Erfassungsquerschnitt passierende Partikel des Stroms sowie die Auslösestellen des Probekörpers ein Signal induzierten.

7. Verfahren nach Anspruch 1 oder 2, **dadurch gekennzeichnet, dass** die Partikel sowie die Auslösestellen des Probekörpers an den Erfassungsstellen auf kapazitive Weise detektiert werden.

8. Verfahren nach Anspruch 4, **dadurch gekennzeichnet, dass** der Probekörper (8) eine Abfolge abwechselnd hintereinander angeordneter lichtdurchlässiger und lichtundurchlässiger Abschnitte mit jeweils bekannter, vorzugsweise innerhalb der Gruppe lichtdurchlässiger Abschnitte sowie innerhalb der Gruppe lichtundurchlässiger Abschnitte jeweils identischer Länge aufweist.

9. Verfahren nach einem der Ansprüche 1 bis 8, **dadurch gekennzeichnet, dass** der selbe Probekörper (8) mehrfach nacheinander an den Erfassungsstellen vorbeigeführt wird und dass nach jedem Vorbeiführen ein Wert des effektiven Messabstandes der Erfassungsstellen zueinander bestimmt wird und dass anschließend ein Mittelwert der vorgenannten Werte einzelner Vorgänge des Vorbeiführens als Ergebnis für den effektiven Messabstand der Erfassungsstellen bestimmt wird.

10. Verfahren nach einem der Ansprüche 1 bis 9, **dadurch gekennzeichnet, dass** bei einem Vorbeiführen des Probekörpers (8) an den Erfassungsstellen nur dann ein Wert für den effektiven Messabstand der Erfassungsstellen bestimmt und ausgegeben wird, wenn eine Mindestanzahl an gültigen Signalen der zeitlichen Signalfolgen sowohl der ersten Erfassungsstelle als auch der zweiten Erfassungsstelle gemessen wird.

11. Verfahren nach einem der Ansprüche 1 bis 10, **dadurch gekennzeichnet, dass** bei einem Vorbeiführen des Probekörpers (8) an den Erfassungsstellen nur dann ein Wert für den Abstand der Erfassungsstellen bestimmt und ausgegeben wird, wenn die Anzahl der Signale der zeitlichen Signalfolge der ersten Erfassungsstelle mit der Anzahl der Signale der zeitlichen Signalfolge der zweiten Erfassungsstelle übereinstimmt.

12. Verfahren nach einem der Ansprüche 1 bis 11, **dadurch gekennzeichnet, dass** die Zeit zwischen der Erzeugung des der ersten Auslösestelle (15) des Probekörpers (8) zugeordneten Signals und des der letzten Auslösestelle (15) des Probekörpers (8) zugeordneten Signals eine bestimmte Maximalzeit nicht überschreitet bzw. eine bestimmte Minimalzeit nicht unterschreitet.

13. Verfahren nach einem der Ansprüche 1 bis 12, **dadurch gekennzeichnet, dass** der Probekörper (8) entlang einer Führungseinrichtung, vorzugsweise einer linearen Führungsschiene, an den Erfassungsstellen vorbeigeführt wird.

14. Verfahren nach einem der Ansprüche 1 bis 13, **dadurch gekennzeichnet, dass** der Probekörper (8) von einer Bedienperson manuell, vorzugsweise unter Zuhilfenahme einer Führungseinrichtung, an den Erfassungsstellen vorbeigeführt wird.

15. Verfahren nach einem der Ansprüche 1 bis 13, **dadurch gekennzeichnet, dass** der Probekörper (8) mittels einer Antriebseinrichtung, die vorzugsweise mit Fremdenergie versorgt ist, vorzugsweise unter Zuhilfenahme einer Führungseinrichtung, an den Erfassungsstellen vorbeigeführt wird.

## Claims

1. A method for determining the actual measuring distance between two measuring points of a device for measuring the velocity of a stream of free-flowing particles, wherein at each measuring point a signal can be generated by a passing particle and the current velocity can be calculated by a statistical evaluation of a plurality of signals generated by the particles, wherein a test specimen (8) of known geometry is directed past the measuring points and the distance between the measuring points is determined from the signals thereby generated, **characterized in that** the test specimen (8) exhibits a plurality of triggering points (15) disposed spaced from and behind one another, the spatial configuration of said triggering points relative to one another being known, and that a signal is generated when each triggering point (15) passes each measuring point, wherein the spacing of the measuring points relative to one another is determined from the temporal signal sequences generated at the two measuring points by the plurality of triggering points (15).

2. The method according to claim 1, **characterized in that** the distance is determined according to the formula

$$\bar{s}_{\text{Measuring point,eff}} = \frac{1}{n}\sum_{i=1}^{n} s_{i,\text{Test specimen}} \frac{\delta t_i}{\Delta t_{i,1}} \quad \text{or} \quad \frac{1}{n}\sum_{i=1}^{n} s_{i,\text{Test specimen}} \frac{\delta t_i}{\Delta t_{i,2}}$$

3. The method according to claim 1 or 2, **characterized in that** the particles and triggering points of the test specimen (8) are detected optically.

4. The method according to claim 3, **characterized in that** a light barrier arrangement is disposed at each measuring point, the light barrier (10.1, 10.2) whereof, which defines a measuring cross-section, being interrupted by passing current particles and by the triggering points (15) of the test specimen (8), which exhibit a change in light transmission.

5. The method according to claim 1 or 2, **characterized in that** the particles and triggering points (15) of the test specimen (8) are detected by inductive means at the measuring points.

6. The method according to claim 5, **characterized in that** a coil arrangement is disposed at each measuring point, in the measuring cross-section whereof passing current particles and the triggering points of the test specimen induce a signal.

7. The method according to claim 1 or 2, **characterized in that** particles and triggering points of the test specimen are detected by capacitive means at the measuring points.

8. The method according to claim 4, **characterized in that** the test specimen (8) exhibits a sequence of light-permeable and light-impermeable sections arranged alternately behind one another, each with known sections which are preferably light-permeable within the group and sections which are light-impermeable within the group, each of identical length.

9. The method according to one of the claims 1 to 8, **characterized in that** the same test specimen (8) is directed past the measuring points multiple times in succession and that after each passing a value for the actual measuring distance of the recording points relative to one another is determined and that a mean value of the aforementioned values of the individual passing processes is subsequently determined as the result of the actual measuring distance of the measuring points.

10. The method according to one of the claims 1 to 9, **characterized in that** when the test specimen (8) is directed past the measuring points, a value for the actual measuring distance of the measuring points is only determined and displayed when a minimum number of valid signals in the temporal signal sequences is measured both for the first measuring point and also for the second measuring point.

11. The method according to one of the claims 1 to 10, **characterized in that** when the test specimen (8) is directed past the measuring points, a value for the actual measuring distance of the measuring points is only determined and displayed when the number of signals in the temporal signal sequence of the first measuring point agrees with the number of signals in the temporal signal sequence of the second measuring point.

12. The method according to one of the claims 1 to 11, **characterized in that** the time between the generation of the signal assigned to the first triggering point (15) of the test specimen (8) and the signal assigned to the last triggering point (15) of the test specimen (8) does not exceed a given maximum time or does not fall below a given minimum time.

13. The method according to one of the claims 1 to 12, **characterized in that** the test specimen (8) is directed past the measuring points along a guiding mechanism, preferably a linear guide rail.

14. The method according to one of the claims 1 to 13, **characterized in that** the test specimen (8) is directed past the measuring points manually by an operator, preferably with the help of a guiding mechanism.

**15.** The method according to one of the claims 1 to 13, **characterized in that** the test specimen (8) is directed past the measuring points by means of a drive mechanism, which is preferably supplied with external energy, preferably with the help of a guiding mechanism.

**Revendications**

**1.** Procédé pour déterminer l'écart de mesure effectif entre deux emplacements de détection d'un dispositif pour mesurer la vitesse d'un courant de particules librement mobiles, à chaque emplacement de détection un signal pouvant être généré par une particule qui passe et la vitesse du courant pouvant être calculée grâce à une évaluation statistique d'une pluralité de signaux générés par les particules, moyennant quoi on fait passer un corps d'éprouvette (8) à géométrie connue aux emplacements de détection en déterminant à partir des signaux ce faisant générés l'écart entre les emplacements de détection, **caractérisé en ce que** le corps d'éprouvette (8) présente une pluralité d'emplacements de déclenchement (15) espacés les uns des autres et disposés les uns derrières les autres, dont la disposition dans l'espace les uns par rapport aux autres est connue, et **en ce que** lors du passage à chaque emplacement de déclenchement (15) un signal est généré à chaque emplacement de détection, moyennant quoi l'on détermine à partir des suites chronologiques de signaux générées par la pluralité des emplacements de déclenchement (15) aux deux emplacements de détection l'écart des emplacement de détection l'un par rapport à l'autre.

**2.** Procédé selon la revendication 1, **caractérisé en ce que** l'écart est déterminé d'après la formule

$$\bar{s}_{\text{emplacement de détection, eff}} = \frac{1}{n}\sum_{i=1}^{n} s_{\text{i, corps d'éprouvette}} \frac{\delta t_i}{\Delta t_{i,1}}$$

ou

$$\frac{1}{n}\sum_{i=1}^{n} s_{\text{i, corps d'éprouvette}} \frac{\delta t_i}{\Delta t_{i,2}}$$

**3.** Procédé selon la revendication 1 ou 2, **caractérisé en ce que** les particules et les emplacements de déclenchement du corps d'éprouvette (8) sont détectés de manière optique.

**4.** Procédé selon la revendication 3, **caractérisé en ce qu'**à chaque emplacement de détection se trouve un dispositif de barrière lumineuse, dont la barrière lumineuse (10.1, 10.2) définissant une section de détection est interrompue par des particules du courant qui passent ainsi que par les emplacements de déclenchement (15) du corps d'éprouvette (8) présentant une modification de la translucidité.

**5.** Procédé selon la revendication 1 ou 2, **caractérisé en ce que** les particules ainsi que les emplacements de déclenchement (15) du corps d'éprouvette (8) sont détectés de manière inductive aux emplacements de détection.

**6.** Procédé selon la revendication 5, **caractérisé en ce qu'**à chaque emplacement de détection se trouve un dispositif de bobine, dans la section de détection de laquelle des particules qui passent du courant ainsi que les emplacements de déclenchement du corps d'éprouvette induisent un signal.

**7.** Procédé selon la revendication 1 ou 2, **caractérisé en ce que** les particules ainsi que les emplacements de déclenchement du corps d'éprouvette sont détectés de manière capacitive aux emplacements de détection.

**8.** Procédé selon la revendication 4, **caractérisé en ce que** le corps d'éprouvette (8) présente une suite de sections translucides et non translucides disposées en alternance les unes derrière les autres avec respectivement une longueur connue, de préférence respectivement identique à l'intérieur du groupe des sections translucides ainsi qu'à l'intérieur du groupe des sections non translucides.

**9.** Procédé selon l'une des revendications 1 à 8, **caractérisé en ce que** l'on fait passer plusieurs fois à la suite le même corps d'échantillon (8) aux emplacements de détection et qu'après chaque passage, on détermine une valeur de l'écart de mesure effectif des emplacements de détection entre eux et **en ce que** l'on détermine ensuite une valeur moyenne des valeurs précitées d'évènements de passage individuels en guise de résultat pour l'écart de mesure effectif des emplacements de détection.

**10.** Procédé selon l'une des revendications 1 à 9, **caractérisé en ce que**, lorsque l'on fait passer un corps d'éprouvette (8) aux emplacements de détection, on détermine et donne une valeur pour l'écart de mesure effectif des emplacements de détection seulement si on mesure une quantité minimale de signaux valides des suites chronologiques de signaux du premier emplacement de détection tout comme également du deuxième emplacement de détection.

**11.** Procédé selon l'une des revendications 1 à 10, **caractérisé en ce qu'**en faisant passer le corps d'éprouvette (8) aux emplacements de détection, on détermine et donne une valeur pour l'écart des emplacements de détection seulement si le nombre de signaux de la suite chronologique de signaux du premier emplacement de détection correspond au nombre de signaux de la suite chronologique de signaux du deuxième emplacement de détection.

**12.** Procédé selon l'une des revendications 1 à 11, **caractérisé en ce que** le temps entre la génération du signal associé au premier emplacement de déclenchement (15) du corps d'éprouvette (8) et du signal associé au dernier emplacement de déclenchement (15) du corps d'éprouvette (8) ne dépasse pas par le haut un temps maximal déterminé et/ou ne dépasse pas par le bas un temps minimal déterminé.

**13.** Procédé selon l'une des revendications 1 à 12, **caractérisé en ce que** l'on fait passer le corps d'éprouvette (8) le long d'un dispositif de guidage, de préférence un rail de guidage linéaire, devant les emplacements de détection.

**14.** Procédé selon l'une des revendications 1 à 13, **caractérisé en ce que** l'on fait passer manuellement le corps d'éprouvette (8) aux emplacements de détection grâce à un opérateur, de préférence en faisant appel à un dispositif de guidage.

**15.** Procédé selon l'une des revendications 1 à 13, **caractérisé en ce que** l'on fait passer le corps d'éprouvette (8) à l'aide d'un dispositif d'entraînement, lequel est de préférence alimenté en énergie étrangère, de préférence en faisant appel à un dispositif de guidage, aux emplacements de détection.

Fig. 1

EP 1 970 712 B1

a) 1.1 2.1 b) c) Verschmutzter Bereich

$S_{Detektor}$ $S_{LS,Geo}$ $S_{LS,Geo}$ $S_{LS,eff}$ $S_{LS,Geo}$ $S_{LS,eff}$

1.2 2.2

Fig. 2

Fig. 3

Fig. 4

Fig. 5

EP 1 970 712 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0678748 A1
- US 20030142289 A1
- EP 1460433 A2
- US 4373816 A